# EUROPEAN PATENT APPLICATION

(11) **EP 3 772 440 A1**
(43) Date of publication of application: **10.02.2021**
(21) Application number: 20187484.9
(22) Date of filing: 23.07.2020
(51) Int. Cl.: B60T 7/04, B60T 11/10, B60T 17/08, B60T 13/12

(54) **OIL-HYDRAULIC ACTUATOR FOR A PARKING BRAKE FOR VEHICLES**

(30) Priority: 05.08.2019 IT 201900014016
(71) Applicant: OGNIBENE POWER S.P.A., 42124 Reggio Emilia (IT)
(72) Inventor: OGNIBENE, Claudio, 42121 Reggio Emilia (IT)
(74) Representative: Corradini, Corrado

(57) **Abstract**

The invention describes an actuator (25), of the oil-hydraulic type, for a parking brake (20) of a vehicle (1) comprising: a first cylindrical body (35) equipped with a cylindrical portion (40), which defines an axial cavity, and with a bottom plate (70) that closes the axial cavity at a first axial end (45) of the cylindrical portion, a second cylindrical body (80), slidably associated with the first cylindrical body (35) with respect to a central axis (X) of the first cylindrical body and that is equipped with a cylindrical portion (85) defining an axial cavity and with a bottom plate (110) that closes the axial cavity at a second axial end (95) of the cylindrical portion of the second cylindrical body itself, and a first piston (125) rigidly fixed to the second cylindrical body (80) and a second piston (145) slidably associated with the second cylindrical body (80), said pistons being received in the inner volume, each comprising at least one communication through-duct (140,160), and being aligned along the central axis (X) so that the first piston (125) is closer to the bottom plate (70) of the first cylindrical body (35) with respect to the second piston (145). Moreover, the actuator comprises a stem (180) received in the inner volume and equipped with a first axial end (185) rigidly fixed to the bottom plate (70) of the first cylindrical body (35), with a shaft slidably inserted with clearance in a through hole made in the first piston (125) and in a through hole made in the second piston (145), and with an opposite second axial end (190) configured so as to define an end stop for maximum distance between the second piston (145) and the bottom plate (70) of the first cylindrical body (35), a spring (200) axially arranged between the first piston (125) and the second piston (145), and a single feeding channel (225,230,235), made only in one among the first cylindrical body (35) and the second cylindrical body (80).

## Description

### TECHNICAL FIELD

The present invention relates to an actuator for a parking brake for vehicles, in particular it relates to an actuator for a parking brake for vehicles configured to activate, i.e. to brake the vehicle, even in conditions of absence of power supply, i.e. in the absence of electrical power or in the absence of pressurised liquid, conditions that are encountered for example when the vehicle is off or has suffered a failure at the electrical or oil-hydraulic systems.

### PRIOR ART

Parking brakes are generally used to keep the vehicle on which they are installed immobile, locking at least one wheel, or a pair of wheels, of the vehicle itself. However, they can also be used to carry out emergency braking.

Parking brakes comprise an actuator that, through one or more lever mechanisms, acts on a jaw adapted for engaging a disc or a drum rigidly connected in rotation to a wheel. The actuator of a parking brake must be configured to activate, i.e. to lock the wheels in position, even in the case in which electrical power or pressurised liquid is lacking.

A known solution of such an actuator comprises a single-acting cylinder equipped with a cylindrical body inside which a piston is slidably associated, which divides the inner volume of the cylindrical body into a first chamber and a second chamber. A stem is fixed to the piston and comes out from the cylindrical body, for example at a wall of the cylindrical body that partially defines the second chamber, to control the lever mechanism of the parking brake. The single-acting cylinder comprises an inlet duct of pressurised fluid, made in the cylindrical body at the first chamber, and a spring housed in the second chamber and configured to push on the piston so as to automatically take the stem into its position of minimum extension with respect to the cylindrical body, when there is no pressurised fluid in the first chamber, or in any case when the pressure of the fluid in the first chamber is less than the force exerted by the spring.

The second chamber can be directly in communication with the outside. In this case, a problem of such a solution is that the spring is in contact with the air of the outside and that foreign bodies can enter the second chamber, which reduces the useful life of the actuator.

A known alternative solution to the one just described provides that the work liquid is present also in the second chamber, which must therefore consequently have an outlet duct of the liquid. Such a solution, if on the one hand it does not have the problem of the reduction of useful life due to the communication of the second chamber with the outside, is bulkier since it needs the outlet duct to operate, said outlet duct having to be necessarily connected to a low-pressure tank of the liquid through suitable pipes.

The purpose of the present invention is to overcome the problems of the prior art, in a simple, rational and low-cost solution.

Such purposes are accomplished by the characteristics of the invention given in the independent claim. The dependent claims outline preferred and/or particularly advantageous aspects of the invention.

### PRESENTATION OF THE INVENTION

The invention, particularly, provides an actuator, of the oil-hydraulic type, for a parking brake of a vehicle comprising:
- a first cylindrical body equipped with a cylindrical portion, which defines an axial cavity, and with a bottom plate that closes the axial cavity at a first axial end of the cylindrical portion,
- a second cylindrical body, slidably associated with the first cylindrical body with respect to a central axis of the first cylindrical body and that is equipped with a cylindrical portion defining an axial cavity and with a bottom plate that closes the axial cavity at a second axial end of the cylindrical portion of the second cylindrical body itself,
- a first piston rigidly fixed to the second cylindrical body and a second piston slidably associated with the second cylindrical body, said pistons being received in the inner volume, each comprising at least one communication through-duct, and being aligned along the central axis so that the first piston is closer to the bottom plate of the first cylindrical body with respect to the second piston,
- a stem received in the inner volume and equipped with a first axial end rigidly fixed to the bottom plate of the first cylindrical body, with a shaft slidably inserted with clearance in a through hole made in the first piston and in a through hole made in the second piston, and with an opposite second axial end configured so as to define an end stop for the maximum distance between the second piston and the bottom plate of the first cylindrical body,
- a spring axially arranged between the first piston and the second piston, and
- a single feeding channel, made only in one among the first cylindrical body and the second cylindrical body.

In this way, the parking brake is particularly compact for the same force that can be generated, long-lasting, since there are no inner components in contact with the external air, and particularly compact since the number of pipes from and towards the actuator is decreased.

In particular, according to an embodiment of the invention, the feeding channel comprises only a single feeding duct.

Such a configuration makes it possible to reduce the bulk to the minimum, since the communication between the inner volume and the outside of the actuator, for example an actuation device of the actuator adapted to selectively send a pressurised fluid to the actuator itself, can take place through a single tube.

An alternative embodiment of the feeding channel provides that the feeding channel can comprise only an inlet duct and an outlet duct.

In both embodiments of the feeding channel, such a feeding channel is preferably made in the first cylindrical body.

This characteristic makes it possible to further compact the parking brake and simplifies the design of the positioning of the actuator in the vehicle since the pipes for feeding the actuator can be localised at the first cylindrical body.

The following characteristics of the invention are also common to both embodiments of the invention.

An aspect of the invention provides that the actuator can comprise another spring coaxial to the spring and arranged in parallel to it with respect to the first and to the second piston. In this way, for the same force generated by the elastic elements, a high compactness is obtained.

According to another aspect of the invention, the actuator can comprise an adjustment mechanism configured to adjust the maximum distance between the second piston and the bottom plate of the first cylindrical body.

In this way, it is possible to change the preload of the springs, and therefore the force exerted by the actuator to keep the wheels locked. Moreover, by adjusting the preload it is possible to obtain different actuators capable of making the same force mitigating the problem of the production tolerances of the springs, which within one same batch can have differences in the elastic coefficient even of 10%.

According to yet another aspect of the invention, the actuator can comprise a sensor adapted for detecting a parameter indicative of the position of the second cylindrical body with respect to the first cylindrical body.

In addition, the adjustment system also has a safety function, since in the event that the actuator is blocked, for example in a position where it prevents the vehicle from running, the adjustment system allows to disassemble the actuator, thus freeing the vehicle.

In this way, it is possible to monitor the correct operation of the actuator and remotely detect possible anomalies or failures.

According to a further aspect of the invention, the sensor can be of the magnetic type and be fixed to the second cylindrical body.

Thanks to such a characteristic the sensor is particularly strong and suitable for being installed on an actuator adapted for operating on a vehicle.

However, this does not rule out the possibility of the sensor being optical.

An aspect of the invention provides that the actuator can comprise a protective sleeve made of a magnetic material, which is connected to the first cylindrical body and wraps around a portion of the second body such that the sensor is covered by said sleeve for the entire useful stroke of the second cylindrical body with respect to the first cylindrical body.

In this way, it is possible to increase the useful life of the sensor and at the same time not affect the precision of detection.

Another aspect of the invention provides that the actuator can comprise an end stop element configured to limit the maximum distance between the bottom plate of the first cylindrical body and the second cylindrical body.

Alternatively or additionally, the actuator can comprise an end stop element configured to limit the minimum distance between the first piston and the second piston.

If combined together, such two end stop elements ensure greater safety of use.

The invention also provides a parking brake comprising an actuator according to any one of the characteristics described above, i.e. of claims 1 to 10, and a connection element equipped with a portion directly connected to one among the first cylindrical body and the second cylindrical body.

Furthermore, the invention provides a vehicle equipped with a frame, a wheel rotatably associated with respect to the frame and a parking brake as described above, i.e. according to claim 11, and configured to act on said wheel.

### BRIEF DESCRIPTION OF THE DRAWINGS

Further characteristics and advantages of the invention will become clear from reading the following description provided as a non-limiting example, with the help of the figures illustrated in the attached tables.
Figure 1 is a schematic partial view of a vehicle on which a parking brake equipped with an actuator according to the invention is installed, said actuator being illustrated sectioned according to a longitudinal plane.
Figure 2 is a schematic view of the parking brake of figure 1.
Figure 3 is a section view of the actuator of the parking brake of the previous figures, in a configuration of minimum extension.
Figure 4 is a section view of the actuator of the previous figures, illustrated in a configuration of maximum extension.
Figure 5 is a section view according to a longitudinal section plane of another embodiment of the actuator of the parking brake according to the invention.

### DETAILED DESCRIPTION

With particular reference to such figures, reference numeral 1 globally indicates a vehicle, in particular a self-propelled vehicle, preferably adapted for moving at low speed (typically below 60 km/h), like for example a farming tractor or an earth-moving machine.

Said vehicle comprises a frame 5 and a plurality of wheels 10 for resting on the ground rotatably associated with said frame, for example through the interposition of lever mechanisms and damping apparatuses. Moreover, the vehicle 1 can comprise a main braking system adapted for counteracting the rotation of said wheels during normal travel of the vehicle.

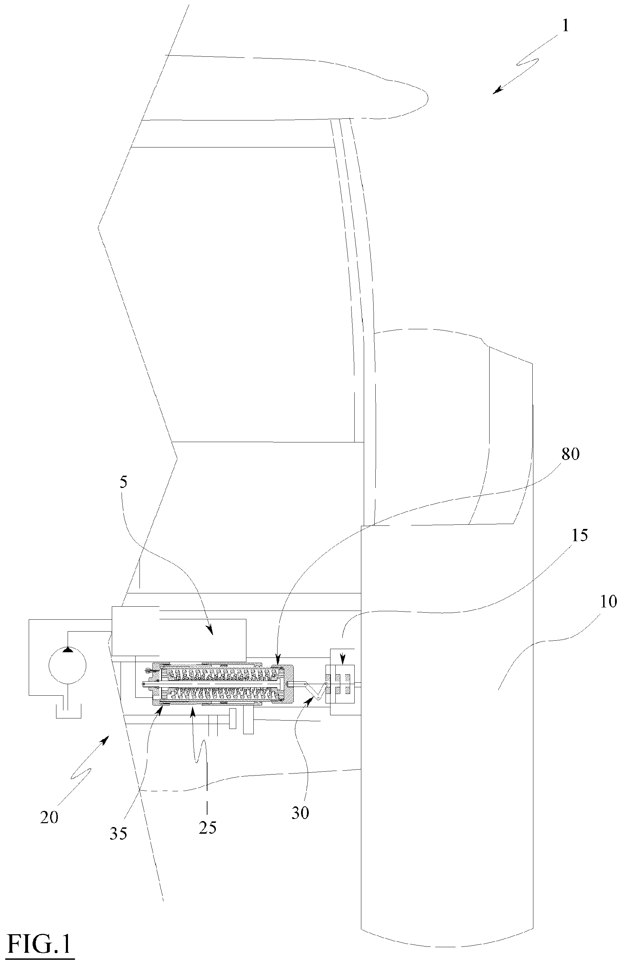

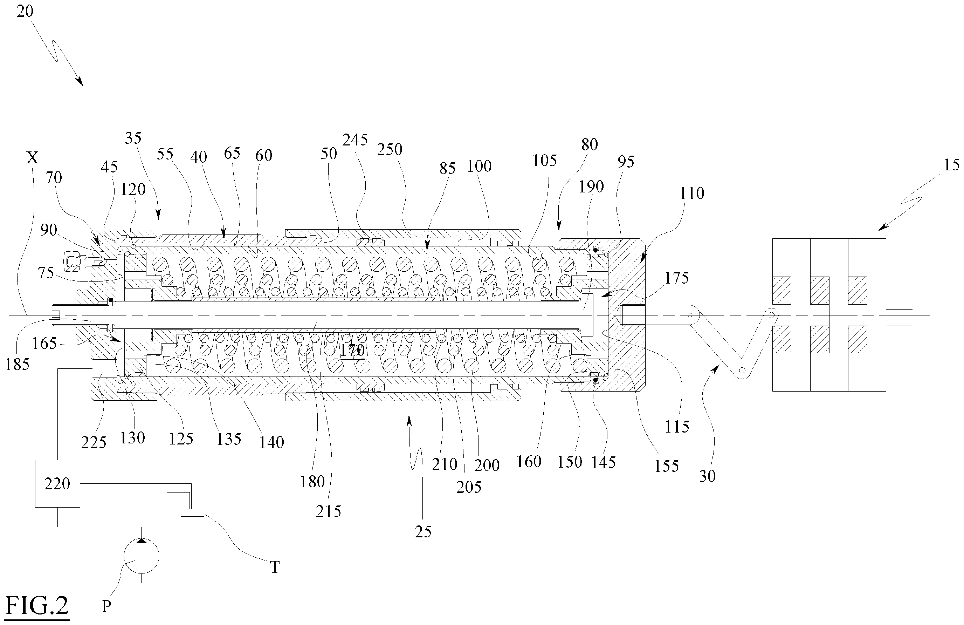

The main braking system can comprise at least one jaw 15 (schematically illustrated in figures 1 and 2) and one among a disc or a drum (not illustrated in the figures) rigidly rotating as a unit with a wheel of the plurality of wheels and on which the jaw acts to counteract the rotation of a wheel 10 of the vehicle. Preferably, the main braking system comprises a jaw and a respective disc or drum for each wheel of the vehicle.

The main braking system comprises a main actuator (not illustrated) of the jaw, or of the jaws, and a control of said main actuator able to be actuated, for example manually, by an operator of the vehicle. For example, such a control can be pedal or lever operated.

The vehicle 1 comprises a parking brake 20 configured to selectively keep the vehicle 1 stationary, i.e. to selectively lock the rotation of at least one wheel 10, and possibly to carry out emergency braking, for example in the case in which the main braking system is inoperative.

The parking brake 20 comprises an actuator 25, of the oil-hydraulic type, mechanically connected to a jaw, for example to the jaw 15.

The parking brake 20 can comprise at least one connection element 30 that the actuator 25 actuates to exert a braking action on a wheel 10 of the plurality of wheels. For example, the connection element 30 is connected to the jaw 15 and the actuator 25 selectively actuates the jaw 15 through the connection element 30.

For example, the connection element 30 comprises a lever mechanism. In particular in the embodiment illustrated the lever mechanism comprises a first rod, coaxial to the axis X and rigidly fixed without residual degrees of freedom to the actuator 25, and a second V-shaped rod, which at one end is hinged to the first rod, at the opposite end is hinged to a portion of the jaw 15 and in the middle is hinged to the frame 5 of the vehicle 1. However, this does not rule out the possibility that the connection element 30 can also only comprise a rigid rod equipped with an end fixedly connected, or hinged, to the actuator 25 and an opposite end fixedly connected, or hinged, to a portion of the jaw 15.

In the illustrated embodiments, the parking brake 20 is configured to act on the wheels 10 of the vehicle 1 through the main braking system of the vehicle, i.e. it is configured to act on a wheel 10 of the plurality of wheels actuating the jaw 15. The actuator 25 thus acts on the wheel 10 in parallel with respect to the main actuator of the main braking system that normally actuates the jaw 15 to brake the vehicle 1.

In an alternative embodiment that is not illustrated, the parking brake can comprise a jaw, independent with respect to the main braking system and adapted for acting on the same disc or drum of the main braking system, or adapted for acting on a disc or drum rigidly connected in rotation to a wheel of the vehicle and independent with respect to the main braking system. In this case, the actuator 25 of the parking brake is configured to act selectively only on such a jaw independent from the jaws of the main braking system.

Regardless of the jaw on which it acts, the parking brake 20, i.e. the actuator 25, is configured so that in unperturbed condition, i.e. in a condition in which an actuation signal is not sent to the actuator 25, the actuator 25 actuates the jaw 15 so that it keeps the corresponding wheel 10 locked, i.e. it counteracts the rotation of the corresponding wheel. When an actuation signal is sent to the actuator 25, for example in the form of a pressurised fluid, the parking brake 20 is configured to actuate the jaw 15 so that it allows, i.e. does not counteract, the rotation of the corresponding wheel 10.

For example, the actuator 25 is of the single-acting oil-hydraulic type, preferably the movement of which is controlled through a pressurised liquid and an elastic element. The actuator 25 comprises a first cylindrical body 35, for example adapted for being rigidly fixed, preferably rigidly fixed without residual degrees of freedom, to a portion of the frame 5 of the vehicle 1 on which the parking brake is installed.

The first cylindrical body 35 comprises a cylindrical portion 40, having a central axis X and that defines an axial through-cavity that extends, along the central axis X, from a first axial end 45 of the cylindrical portion 40 to a second axial end 50 of the cylindrical portion 40, including ends.

The cylindrical portion 40 of the first cylindrical body 35 comprises a first inner cylindrical surface 55, coaxial to the central axis X, a second inner cylindrical surface 60, coaxial to the central axis X and having a smaller diameter with respect to the first inner cylindrical surface 55, and a step 65 that joins the first inner cylindrical surface to the second inner cylindrical surface.

Such a step 65 comprises an annular flat surface lying on a plane perpendicular to the central axis X and that connects the inner cylindrical surfaces.

Moreover, the first inner cylindrical surface 55 is proximal to the first axial end 45 and the second inner cylindrical surface 60 is proximal to the second axial end 50. Furthermore, at the axial ends 45,50, the cylindrical portion 40 has respective annular surfaces lying on planes perpendicular to the central axis X.

The first cylindrical body 35 also comprises a bottom plate 70 that closes, for example hermetically, the cylindrical portion 40 at the first axial end 45. The bottom plate can comprise an inner surface 75 facing towards the axial cavity of the cylindrical portion 40, for example lying on a plane transversal to the central axis X, preferably perpendicular to such a central axis X. The annular surface of the first axial end 45 of the cylindrical portion 40 is arranged (entirely) in contact with the inner surface 75 of the bottom plate 70.

In the illustrated embodiments, the bottom plate 70 is fixed to the respective cylindrical portion through a threaded connection. In particular, the cylindrical portion 40 has an outer segment (radially external to the first inner cylindrical surface 55) on which it is possible to screw a matching threaded portion of the bottom plate 70.

However, this does not rule out the possibility that in an alternative embodiment that is not illustrated the bottom plate 70 can be welded or made in one piece with the cylindrical portion 40.

The actuator 25 comprises a second cylindrical body 80 slidably associated, for example in a sealed manner, to the first cylindrical body 35 with respect to the central axis X.

An end of the connection element 30 is connected, for example hinged or rigidly fixed without residual degrees of freedom, to the second cylindrical body 80, i.e. to an end thereof distal from the first cylindrical body. Furthermore, the second cylindrical body 80 slides at least partially along the central axis X inside the axial cavity of the first cylindrical body 35.

The second cylindrical body 80 always projects at least partially from the axial cavity of the first cylindrical body 35.

In the illustrated embodiment, the first cylindrical body 35 is associated with the frame 5 of the vehicle 1 and the second cylindrical body 80 is associated with the connection element 30, however this does not rule out the possibility that in an alternative embodiment the first cylindrical body 35 can be associated with the connection element 30 and the second cylindrical body 80 can be associated with the frame 5 of the vehicle 1.

The second cylindrical body 80 comprises a cylindrical portion 85 coaxial to the central axis X and that defines an axial through-cavity that extends along the central axis X, from a first axial end 90 of the cylindrical portion 85 to a second axial end 95 of the cylindrical portion 85.

The cylindrical portion 85 is slidably associated, for example in a sealed manner, with the cylindrical portion 40 along the central axis X.

The second cylindrical body 80 is associated with the first cylindrical body 35 so that the first axial end 90 is proximal to the bottom plate 70 of the first cylindrical body 35 and the second axial end 95 is distal from said bottom plate 70.

The second axial end 95 always projects from the axial cavity of the first body.

In particular, the length of the second cylindrical body (measured along the central axis X) is greater than the length of the axial cavity in the same direction, or even greater than the distance between the axial ends 45 and 50 of the first body.

The cylindrical portion 85 of the second cylindrical body 80 comprises an outer cylindrical surface 100 coaxial to the central axis X and that has substantially the same nominal diameter as the second inner cylindrical surface 60. In this way, the outer cylindrical surface 100 of the second cylindrical body 80 is configured to slide along the central axis X in contact with the second inner cylindrical surface 60 of the first cylindrical body 35, said second inner cylindrical surface thus acting as a guide for the second cylindrical body. The actuator can comprise one or more gaskets configured to make a substantially hermetic seal between said two surfaces.

The cylindrical portion 85 also comprises an inner cylindrical surface 105 coaxial to the central axis X and to the outer cylindrical surface 100, and having a smaller diameter with respect to the outer cylindrical surface 100. Preferably, the inner cylindrical surface 105 extends from the first axial end 90 to the second axial end 95, including ends.

The outer cylindrical surface 100 has a non-zero distance from the inner cylindrical surface 105, for example such a distance is at least greater than 1.1 times the diameter of the inner cylindrical surface 105, preferably it is at least greater than 1.05 times the diameter of the inner cylindrical surface 105. Such a distance defines the thickness of the cylindrical portion 85 of the second cylindrical body 80.

Furthermore, at the axial ends 90,95, the cylindrical portion 85 has respective annular surfaces lying on planes transversal to the central axis X. Such annular surfaces have a radial extension equal to the distance between the inner cylindrical surface 105 and the outer cylindrical surface 100.

The second cylindrical body 80 also comprises a bottom plate 110 that closes, for example hermetically, the cylindrical portion 85 at the second axial end 95.

Preferably, the connection element 30 is directly connected to the bottom plate 110. The bottom plate 110 can comprise an inner surface 115 facing towards the axial cavity of the cylindrical portion 85 for example lying on a plane transversal to the central axis X, preferably perpendicular to such a central axis X.

Such an inner surface 115 of the bottom plate 110 is continuous along the entire extension thereof.

In the illustrated embodiments, the bottom plate 110 is fixed to the respective cylindrical portion 85 through a threaded connection. In particular, the cylindrical portion 85 has an outer segment (of the outer cylindrical surface 100) on which it is possible to screw a matching threaded portion of the bottom plate 110.

However, this does not rule out the possibility that in an alternative embodiment that is not illustrated the bottom plate 110 can be welded or made in one piece with the cylindrical portion 85.

As stated above, the second cylindrical body 80 is slidably associated with the first cylindrical body 35, in particular between a retracted position, in which the extension along the central axis X of the actuator 25 is the minimum, and for example in which the distance between the bottom plate 70 of the first cylindrical body 35 and the bottom plate 110 of the second cylindrical body 80 is the minimum, and an extended position, in which the extension along the central axis X of the actuator 25 is the maximum, and for example in which the distance between the bottom plate 70 of the first cylindrical body 35 and the bottom plate 110 of the second cylindrical body 80 is the maximum.

The coupling of the first cylindrical body 35 with the second cylindrical body 80 defines an inner volume of the actuator 25, which is formed by the union of the axial cavity of the first cylindrical body 35 with the axial cavity of the second cylindrical body 80. In particular, the inner volume of the actuator 25 is delimited at least by the inner surfaces 75,115 of the bottom plates 70,110, by the first inner cylindrical surface 55 and by the inner cylindrical surface 105.

The inner volume is variable as a function of the position of the second cylindrical body 80 with respect to the first cylindrical body 35.

The actuator 25 comprises a first end stop element configured to limit the movement of the second cylindrical body 80 in the direction going away from the first cylindrical body 35. In the illustrated embodiments the first end stop element comprises a ring 120 inserted in a suitable recess made in the outer cylindrical surface 100 of the second cylindrical body 80, for example close to the first axial end 90, and configured to project radially from such a recess towards the outside. In this way, when the ring 120 contacts the step 65 an end stop is defined for the second cylindrical body 80 in the direction going away from the first cylindrical body 35. Such an end stop defines the extended position of the actuator 25.

The actuator 25 comprises a first piston 125 housed at least partially in the axial cavity of the second cylindrical body 80, i.e. in the inner volume, and rigidly fixed to the second cylindrical body, in particular rigidly fixed to the cylindrical portion 85, so as to slide together with the second cylindrical body 80 with respect to the first cylindrical body 35. For example, the first piston 125 is fixed to the cylindrical portion 85 close to the first axial end 90.

The first piston 125 has an extension in the direction transversal to the central axis X such as to obstruct the cylindrical portion 85 of the second cylindrical body 80 at the segment of said portion to which it is fixed at the second cylindrical body itself. The first piston 125 has a nominal diameter substantially equal to the nominal diameter of the inner cylindrical surface 105.

The first piston 125 comprises a first face 130 facing towards the bottom plate 70 of the first cylindrical body 35 and an opposite second face 135 facing towards the bottom plate 110 of the second cylindrical body 80.

The first piston 125 comprises at least one communication duct 140, of the through type, which crosses the first piston itself from one side to the other, i.e. that crosses it from the first face 130 to the second face 135. For example, the first piston 125 comprises a plurality of said communication ducts 140 radially arranged with respect to the central axis X.

The actuator 25 also comprises a second piston 145 housed (entirely) in the inner volume, i.e. in the axial cavity of the second cylindrical body 80, and slidably associated with the second cylindrical body 80, i.e. slidably associated (in a sealed manner) with the inner cylindrical surface 105. In practice, the second piston 145 is positioned between the first piston 125 and the bottom plate 110 of the second cylindrical body 80.

The second piston 145 has a nominal diameter substantially equal to the nominal diameter of the inner cylindrical surface 105.

The second piston 145 comprises a guide block arranged between the second piston itself and the inner cylindrical surface 105 of the second cylindrical body 80.

The second piston 145 comprises a first face 150 facing towards the bottom plate 70 of the first cylindrical body 35 and an opposite second face 155 facing towards the bottom plate 110 of the second cylindrical body 80.

The second piston 145 comprises at least one communication duct 160, of the through type, which crosses the second piston itself from one side to the other, i.e. that crosses it from the first face 150 to the second face 155. for example the second piston comprises a plurality of said communication ducts 160 radially arranged with respect to the central axis X.

Overall, the first piston 125 and the second piston 145 divide the inner volume into a first chamber 165, comprised between the bottom plate 70 of the first cylindrical body 35 and the first piston 125, a second chamber 170 comprised between the first piston 125 and the second piston 145 and a third chamber 175 comprised between the second piston 145 and the bottom plate 110 of the second cylindrical body 80.

The communication duct 140 of the first piston 125 thus places the first chamber 165 in fluid communication with the second chamber 170 and the communication duct 140 of the second piston 145 places the second chamber 170 in fluid communication with the third chamber 175.

The actuator 25 comprises a stem 180 received in the inner volume and that has a longitudinal axis parallel, preferably coaxial, to the central axis X. The stem 180 is equipped with a first axial end 185 rigidly fixed to the bottom plate 70 of the first cylindrical body 35, with a shaft inserted with clearance in a through hole made in the first piston 125 and in a through hole made in the second piston 145, and with a second axial end 190 opposite the first and configured so as to define an end stop for the maximum distance between the second piston 145 and the bottom plate 70 of the first cylindrical body 35. For example, the second axial end 190 defines only the maximum distance of the second piston 145 from the bottom plate 70, allowing the second piston 145 to approach the bottom plate 70 without being an obstruction.

For example, the second axial end 190 projects beyond the second face 155 of the second piston 145 in the opposite direction to the first face 150 and has a diameter that is greater with respect to the diameter of the through hole and greater with respect to the diameter of the shaft of the stem itself. In the illustrated embodiment the second axial end 190 is disc-shaped and is configured to go into abutment with a respective housing surface made at the second face 155 of the second piston 145.

The longitudinal extension of the stem 180 inside the inner volume is shorter than the minimum distance between the bottom plates 70, 110 of the cylindrical bodies 35, 80 when the actuator 25 is in the retracted position.

The actuator 25 can for example comprise an adjustment device of the extension of the stem in the inner volume, through which it is possible to adjust the maximum distance of the second piston 145 from the bottom plate 70 of the first cylindrical body 35. In the illustrated embodiments, such an adjustment device comprises a threaded through hole 195 made in the bottom plate 70 of the first cylindrical body 35, an outer threading made on the shaft of the stem 180, for example close to the first axial end 45, and coupled with the threaded through hole 195, and at least one nut adapted to selectively lock a rotation of the outer threading with respect to the threaded through hole 195.

The adjustment device also acts as a safety system allowing the actuator to be unblocked in the event that it is blocked, for example this is possible by acting on the stem, unscrewing it with respect to the threaded through hole 195, such that the maximum distance of the second piston 145 from the bottom plate 70 is increased, so as to decrease or reset the spring preload described below.

The actuator 25 also comprises at least one spring 200, for example a compression spring, axially arranged, for example only between the first piston 125 and the second piston 145 and contained entirely in the inner volume. In particular, the spring 200 comprises a first axial end directly in contact with the second face 135 of the first piston 125 and an opposite second axial end directly in contact with the first face 150 of the second piston 145.

In the illustrated embodiments, the actuator 25 comprises another two springs 205,210, for example compression springs, coaxial to the spring 200 and arranged in parallel to said spring with respect to the first piston 125 and to the second piston 145, i.e. also interposed only between the first piston 125 and the second piston 145.. In particular, the springs 200,205,210 are concentric with one another, contained one in the axial empty space of the other and each have a first axial end directly in contact with the second face 135 of the first piston 125 and an opposite second axial end directly in contact with the first face 150 of the second piston 145. Preferably, the actuator comprises only said three springs 200,205,210, that is, it does not include other elastic elements acting on the pistons.

The actuator 25 can comprise a second end stop device configured to limit the maximum distance of the second cylindrical body 80 with respect to the first cylindrical body 35. In particular, the second end stop device limits such a maximum distance by limiting the minimum distance between the first piston 125 and the second piston 145. In the illustrated embodiments the second end stop device comprises a tubular body 215, rigid and fitted onto the stem 180, for example with clearance. The extension of the tubular body is shorter than the extension of the portion of stem present in the inner volume (of shorter extension with respect to the stem).

The actuator 25 comprises a feeding channel, in particular a single feeding channel, adapted for allowing entry into the inner volume and exit from the inner volume of a work fluid adapted for controlling the movement of the second cylindrical body 80 with respect to the first cylindrical body 35.

The feeding channel is made only in one among the first cylindrical body and the second cylindrical body.

For example, the feeding channel is made only in the first cylindrical body 35, preferably it is made only in the bottom plate 70 of the first cylindrical body 35, and is in direct fluid communication with the first chamber 165. In particular, the feeding channel is adapted to allow a fluid connection between the inner volume, for example through the first chamber 165, and an actuation apparatus of the actuator 220 adapted to selectively place the inner volume in communication with a source of high-pressure work fluid P and a tank of fluid T at low pressure.

The feeding channel is substantially the only communication passage with the outside (net of the leaks of work fluid) of the entire inner volume.

This does not rule out the possibility that in an alternative embodiment that is not illustrated the feeding channel can be made only in the second cylindrical body 80, for example in the cylindrical portion 85.

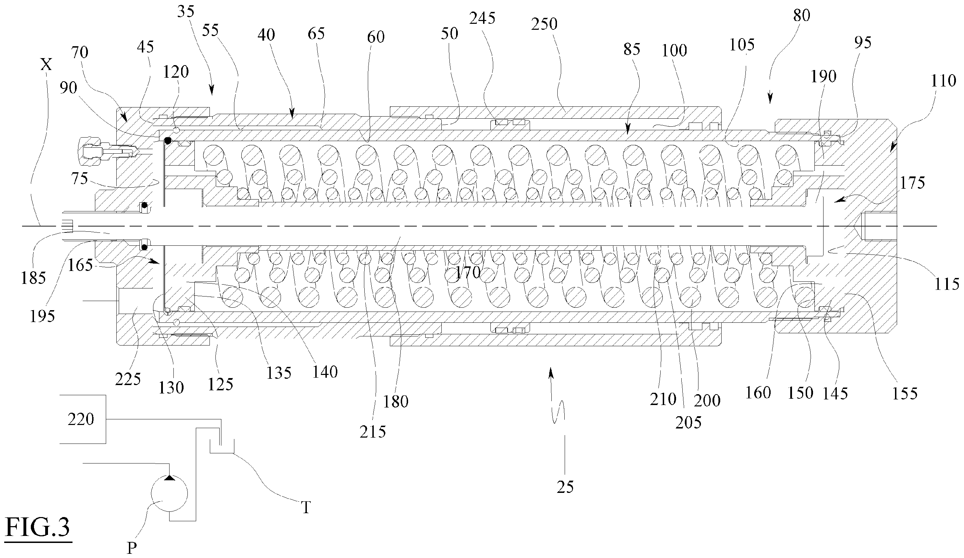

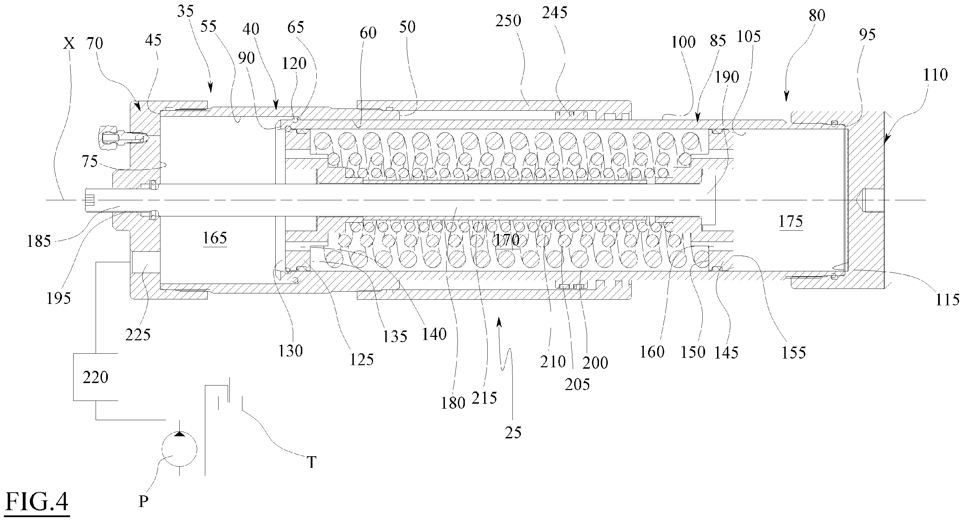

In the embodiment of the feeding channel illustrated in figures 1-4, the feeding channel comprises only a single feeding duct 225 made in the first cylindrical body 35, for example in the bottom plate 70.

The single feeding duct 225 is adapted for placing the inner volume in communication with the source of pressurised fluid and with the tank of fluid at low pressure, i.e. it is adapted for placing the inner volume in communication with the actuation apparatus of the actuator 220. In practice, the single feeding duct 225 is crossed both by high-pressure fluid and low-pressure fluid. The single feeding duct is the only element of the actuator 25 in fluid communication with the actuation apparatus of the actuator 220.

The single feeding duct 225 is shaped like a through hole that totally crosses the bottom plate 70, for example such a through hole has a central axis parallel to the central axis X and crosses the bottom plate 70. However, this does not rule out the possibility that in an alternative embodiment the through hole can be formed in the cylindrical portion 40 and be arranged with central axis perpendicular to the central axis X.

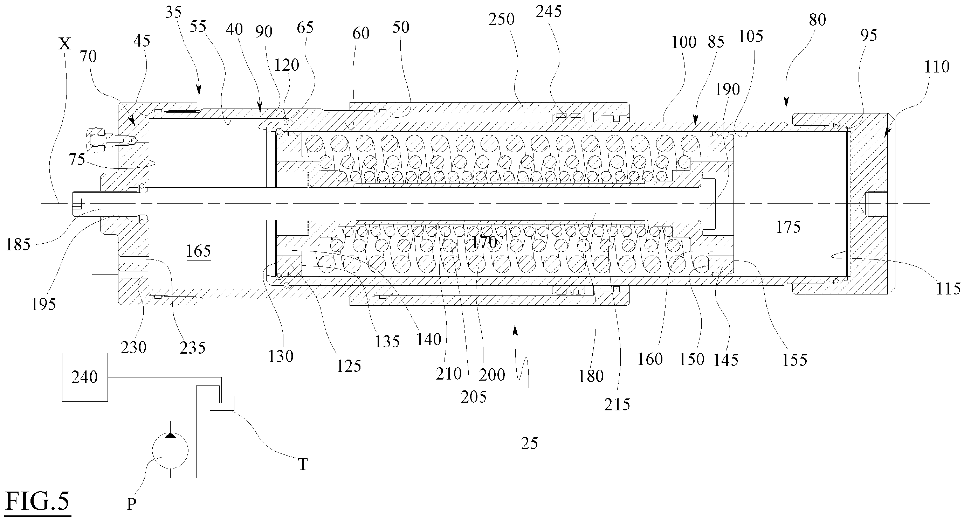

In the embodiment of the feeding channel illustrated in figure 5, the feeding channel comprises only a single inlet duct 230, adapted for placing the inner volume, i.e. the first chamber 165, in communication with the source of high-pressure fluid P, and a single outlet duct 235, adapted for putting the inner volume, i.e. the first chamber 165, in communication with a tank of fluid T at low pressure. Between said ducts and the source of high-pressure fluid P and the tank of fluid T at low pressure an actuation apparatus 240 can be arranged, adapted to selectively allow a fluid communication, respectively between the inlet duct 230 and the source of high-pressure fluid P and between the outlet duct 235 and the tank of fluid T at low pressure.

The inlet duct 230 and the outlet duct 235 are each shaped like a single through hole that totally crosses the bottom plate 70, for example such a through hole has a central axis parallel to the central axis X and crosses the bottom plate 70. However, this does not rule out the possibility that in an alternative embodiment each through hole can be formed in the cylindrical portion 40 and be arranged with central axis perpendicular to the central axis X.

The actuator 25 can comprise a sensor 245 adapted for detecting an indicative, preferably directly indicative, parameter of the position of the second cylindrical body 80 with respect to the first cylindrical body 35. In other words, it is configured at least to detect whether the actuator 25 is in retracted or extended position, preferably also to detect intermediate positions between the end ones.

For example, the sensor 245 is fixed to a portion of the second cylindrical body 80, preferably to a portion of the outer cylindrical surface 100.

In the embodiments illustrated in the figures, the sensor is of the magnetic type, i.e. it exploits as operating principle a variation of a magnetic field to determine a displacement. Preferably, it is a Hall effect sensor.

In the case in which such a sensor 245 is present, the actuator 25 can comprise a protective sleeve 250 made of a magnetic material, which is connected to the first cylindrical body 35 and wraps around a portion of the second cylindrical body 80 such that the sensor is covered by said sleeve for the entire useful stroke of the second cylindrical body with respect to the first cylindrical body.

For example, an end portion of the protective sleeve 250 distal from the first cylindrical body 35 comprises at least one dynamic annular seal adapted for making a hermetic seal between the outer cylindrical surface and the protective sleeve.

The parking brake 20 can comprise an electronic control unit (not illustrated in the figures), operatively connected to the sensor 245 and configured to generate an alarm signal when it detects through said sensor 245 that the position of the second cylindrical body 80 with respect to the first cylindrical body 35 does not correspond to a predetermined position that the second cylindrical body must take up based on an actuation received. The operation of the parking brake 20 according to the invention is as follows.

When a user wishes to immobilise the vehicle through the parking brake, he/she acts on the control of the parking brake so as to send an activation signal to the actuation apparatus of the actuator such that the inner volume of the actuator 25 is placed in fluid communication with the tank of fluid T at low pressure through the feeding channel. When lacking a pressurised fluid entering the first chamber 165 through the feeding channel, the spring 200, i.e. the springs 200,205,210, keeps the first piston 125 at the maximum distance from the second piston 145 and thus keeps the second cylindrical body 80 in retracted position.

In such a position the actuator 25 substantially pulls the connection element 30 towards the frame 5 of the vehicle 1, said connection element actuating the jaw 15 so as to counteract the rotation of the wheel 10.

When the user wishes to leave the wheels 10 of the vehicle 1 free to rotate, i.e. wishes to disinsert the parking brake 20, he/she acts again on the control of the parking brake so as to send an activation signal to the actuation apparatus of the actuator 25 such that the inner volume of the actuator is placed in fluid communication with the source of high-pressure fluid P through the feeding channel.

The pressurised fluid thus enters the first chamber 165 and through the communication ducts 140,160 reaches the second chamber 170 and the third chamber 175 thus pushing on the bottom plate 110 of the second cylindrical body 80. The pressure exerted on the inner surfaces of the actuator 25 overall generates a thrust that goes to compress the spring and takes the second cylindrical body 80 away from the first cylindrical body 35. As a consequence of such a displacement the jaw 15 is actuated through the connection element 30 so as to allow a free rotation of the wheel 10.

During the operation of the actuator 25, the inner volume is always kept full of work fluid, which is for example oil.

The invention thus conceived can undergo numerous modifications and variants all of which are covered by the inventive concept.

Moreover, all of the details can be replaced by other technically equivalent elements. In practice, the materials used, as well as the contingent shapes and sizes, can be whatever according to requirements without for this reason departing from the scope of protection of the following claims.

## Claims

1. Actuator (25), of the oil-hydraulic type, for a parking brake (20) of a vehicle (1) comprising:
- a first cylindrical body (35) equipped with a cylindrical portion (40), which defines an axial cavity, and with a bottom plate (70) that closes the axial cavity at a first axial end (45) of the cylindrical portion,
- a second cylindrical body (80), slidably associated with the first cylindrical body (35) with respect to a central axis (X) of the first cylindrical body and that is equipped with a cylindrical portion (85) defining an axial cavity and with a bottom plate (110) that closes the axial cavity at a second axial end (95) of the cylindrical portion of the second cylindrical body itself,
- a first piston (125) rigidly fixed to the second cylindrical body (80) and equipped with a first face (130) facing the bottom plate (70) of the first cylindrical body (35) and an opposite second face (135) facing the bottom plate (110), and a second piston (145) slidably associated with the second cylindrical body (80) and equipped with a first face (150) facing the bottom plate (70) of the first cylindrical body (35) and an opposite second face (155) facing the bottom (110) of the second cylindrical body (80), said pistons being received in the inner volume, dividing it into a first chamber (165), comprised between the bottom plate (70) of the first cylindrical body (35) and the first piston (125), a second chamber (170) comprised between the first piston (125) and the second piston (145) and a third chamber (175) comprised between the second piston (145) and the bottom plate (110) of the second cylindrical body (80), said pistons each comprising at least one communication duct (140,160) passing through the respective piston (125,145) from the respective first face (130,150) to the respective second face (135,155) placing the first chamber (165) in fluid communication with the second chamber (170) and the second chamber (170) with the third chamber (175) respectively, and said pistons being aligned along the central axis (X), so that the first piston (125) is closer to the bottom plate (70) of the first cylindrical body (35) with respect to the second piston (145),
- a stem (180) received in the inner volume and equipped with a first axial end (185) rigidly fixed to the bottom plate (70) of the first cylindrical body (35), with a shaft slidably inserted with clearance in a through hole made in the first piston (125) and in a through hole made in the second piston (145), and with an opposite second axial end (190) configured so as to define an end stop for maximum distance between the second piston (145) and the bottom plate (70) of the first cylindrical body (35),
- a spring (200) axially arranged between the first piston (125) and the second piston (145), and
- a single feeding channel (225,230,235), made solely in one among the first cylindrical body (35) and the second cylindrical body.

2. Actuator (25) according to claim 1, wherein the feeding channel comprises only a single feeding duct (225).

3. Actuator (25) according to claim 1, wherein the feeding channel comprises only an inlet duct (230) and an outlet duct (235).

4. Actuator (25) according to any one of the preceding claims, wherein the feeding channel (225,230,235) is made only in the first cylindrical body (35).

5. Actuator (25) according to any one of the preceding claims, comprising another spring (205,210) coaxial to the spring (200) and arranged in parallel to it with respect to the first piston (125) and to the second piston (145).

6. Actuator (25) according to any one of the preceding claims, comprising an adjustment mechanism (195) configured to adjust the maximum distance between the second piston (145) and the bottom plate (70) of the first cylindrical body (35).

7. Actuator (25) according to any one of the preceding claims, comprising a sensor (245) adapted for detecting a parameter indicative of the position of the second cylindrical body (80) with respect to the first cylindrical body (35).

8. Actuator (25) according to claim 7, wherein the sensor (245) is of the magnetic type and is fixed to the second cylindrical body (80).

9. Actuator (25) according to claim 8, comprising a protective sleeve (250) made of amagnetic material, which is connected to the first cylindrical body (35) and wraps around a portion of the second cylindrical body (80) such that the sensor (245) is covered by said sleeve for the entire useful stroke of the second cylindrical body with respect to the first cylindrical body.

10. Actuator (25) according to any one of the preceding claims, comprising an end stop element (120) configured to limit the maximum distance between the bottom plate (70) of the first cylindrical body (35) and the second cylindrical body (80).

11. Actuator (25) according to any one of the preceding claims, comprising an end stop element (215) configured to limit the minimum distance between the first piston (125) and the second piston (145).

12. Parking brake (20) comprising an actuator (25) according to any one of the preceding claims and a connection element (30) equipped with a portion directly connected to one among the first cylindrical body (35) and the second cylindrical body (80).

13. Vehicle (1) equipped with a frame (5), a wheel (10) rotatably associated with respect to the frame and a parking brake (20) according to claim 11 configured to act on said wheel (10).
